(19) Europäisches Patentamt
European Patent Office
Office européen des brevets

(11) Veröffentlichungsnummer: **0 063 739**
**B1**

(12) # EUROPÄISCHE PATENTSCHRIFT

(45) Veröffentlichungstag der Patentschrift: **27.06.84**

(51) Int. Cl.³: **C 09 B 45/36**, C 09 B 62/00

(21) Anmeldenummer: **82103110.1**

(22) Anmeldetag: **13.04.82**

(54) **Verfahren zur Herstellung von Kupferkomplexazofarbstoffen.**

(30) Priorität: **24.04.81 DE 3116296**

(43) Veröffentlichungstag der Anmeldung: **03.11.82 Patentblatt 82/44**

(45) Bekanntmachung des Hinweises auf die Patenterteilung: **27.06.84 Patentblatt 84/26**

(84) Benannte Vertragsstaaten: **CH DE FR GB LI**

(56) Entgegenhaltungen:
**EP - A - 0 011 873**
**DE - A - 2 842 640**
**GB - A - 2 026 527**

(73) Patentinhaber: **BAYER AG, Konzernverwaltung RP Patentabteilung, D-5090 Leverkusen 1 Bayerwerk (DE)**

(72) Erfinder: **Henk, Hermann, Dr., Roggendorfstrasse 55, D-5000 Köln 80 (DE)**
Erfinder: **Schündehütte, Karl Heinz, Dr., Klief 75, D-5090 Leverkusen (DE)**
Erfinder: **Ditzer, Reiner, Dr., In der Follmühle 21, D-5068 Odenthal 2 (DE)**
Erfinder: **Bleck, Wolf Eckhard, Dr., Auf dem Broich 28, D-5068 Odenthal (DE)**

**EP 0 063 739 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Herstellung von Kupferkomplexazofarbstoffen aus Azofarbstoffen der Formel

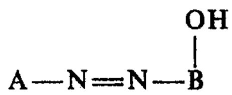

(I)

worin

A = gegebenenfalls weitersubstituierter Phenyl- oder Naphthylrest mit unsubstituierter o-Stellung zur Azogruppe

B = Rest einer Kupplungskomponente mit zur Azogruppe o-ständiger phenolischer oder enolischer OH-Gruppe, insbesondere Reste einer Kupplungskomponente der Phenol-, Naphthol-, Pyrazolon-, Pyridon- oder Acetessigarylid-Reihe,

dadurch gekennzeichnet, daß man in Gegenwart von Lithiumcarbonat in schwach saurem Medium oxydativ kupfert.

Das Lithiumcarbonat wird dabei in solchen Mengen eingesetzt, daß der pH während der Reaktion zwischen etwa 4 und 7 liegt. Dies erreicht man im allgemeinen durch Zugabe von etwa 50—150 g Lithiumcarbonat pro Mol Ausgangsfarbstoff. Es wirkt als Pufferungsmittel für die bei der Reaktion freiwerdende Säure.

Die Reaktion wird ansonsten in an sich bekannter Weise durchgeführt, d. h. in schwach saurem Medium mit etwa äquivalenten Mengen Kupfer-II-salzen und Oxidationsmitteln wie Wasserstoffperoxid, Alkaliperoxid, Perboraten, Percarbonaten oder organischen Persäuren vorzugsweise im Temperaturbereich von etwa 0 bis 50°.

Die oxydative Kupferung unter Verwendung von Lithiumcarbonat verläuft sicherer, schneller und mit höheren Ausbeuten als die oxydative Kupferung unter Verwendung von Acetaten wie Natriumacetat, wie sie üblicherweise durchgeführt wird. (Vgl. z. B. die Deutschen Patentschriften 807 289, 889 196, 900 600 und Angew. Chem. 70, 232—238, (1958)).

Die Farbstoffe (1) können übliche Substituenten aufweisen, z. B. auch Arylazoreste oder faserreaktive Reste. Sie können insbesondere auch zwei kupferbare Monohydroxy-Azogruppierungen im Molekül aufweisen. Vorzugsweise enthalten die Farbstoffe wasserlöslichmachende Gruppen, insbesondere Sulfogruppen.

Das erfindungsgemäße Verfahren eignet sich insbesondere auch zur Herstellung der in den folgenden Literaturstellen beschriebenen Farbstoffe.

US-PS 3 966 704
GB-PS 1 291 529
US-PS 3 422 084
US-PS 4 492 284
GB-PS 1 426 382
US-PS 3 646 002
GB-PS 950 871
GB-PS 1 429 007

Beispiel 1

a) 70 Teile 8-Amino-1-benzolsulfonyloxynaphthalin-3,5-disulfonsäure werden in 300 Teilen Wasser mit 50 Teilen Salzsäure 30%ig gelöst und mit 34 Teilen einer 30%igen Nitritlösung rasch diazotiert. Es bildet sich bald ein Niederschlag. Diese Diazosuspension gibt man zu einer Suspension von 56 Teilen 6-Acetylamino-1-naphthol-4,8-disulfonsäure in 1200 Teilen Wasser und hält gleichzeitig mit einer 20%igen Sodalösung einen pH-Wert von 7. Die Kupplung ist rasch beendet, man erhält eine klare rote Lösung. In diese Lösung werden nacheinander 36 Teile Kupfersulfat und 10 Teile Lithiumcarbonat eingetragen. Die Farbe der Lösung schlägt nach orange-braun um. 300 Teile einer 3—4%igen Wasserstoffperoxidlösung werden in ca. 30 Minuten zugetropft. Der pH-Wert bleibt dabei konstant. Man erhält eine klare blauviolette Lösung.

b) Nach Verseifung der o-Benzolsulfonylgruppe und der Acetylaminogruppe erhält man einen aminogruppenhaltigen Azokupferkomplex, der sich mit faserreaktiven Gruppen kondensieren läßt. Die Umsetzung mit 2,4,6-Trifluor-5-chlor-pyrimidin liefert einen Reaktiv-Farbstoff, der in Form der freien Säure folgender Formel entspricht:

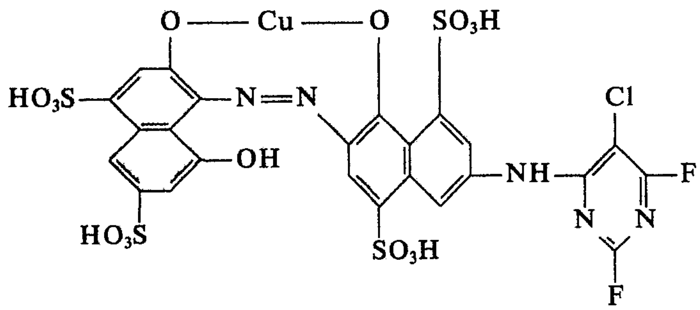

Der Farbstoff liefert auf Baumwolle und Zellwolle aus langer Flotte sowie im Druck klare, grünstichig blaue Färbungen bzw. Drucke von hoher Licht- und Naßechtheit.

Beispiel 2

Ersetzt man in Beispiel 1 2,4,6-Trifluor-5-chlorpyrimidin durch 2,4-Difluor-5-chlor-6-methylpyrimidin, so erhält man ebenfalls einen wertvollen Reaktivfarbstoff.

Beispiel 3

Ersetzt man in Beispiel 1 und 2 8-Amino-1-benzolsulfonyl-oxynaphthalin-3,5-disulfonsäure durch die entsprechende 3,6-disulfonsäure, so erhält man Reaktivfarbstoffe, die auf Baumwollgewebe sehr klare, etwas grünstichig blaue Färbungen und Drucke liefern.

Beispiel 4

Ersetzt man in Beispiel 3 die Fluor-chlor-pyrimidine durch 2,4-Difluor-6-[4'-(β-Sulfatoethylsulfonyl)-phenylamino]-1,3,5-triazin, so erhält man ebenfalls einen wertvollen Reaktivfarbstoff, der in Form der freien Säure folgender Formel entspricht.

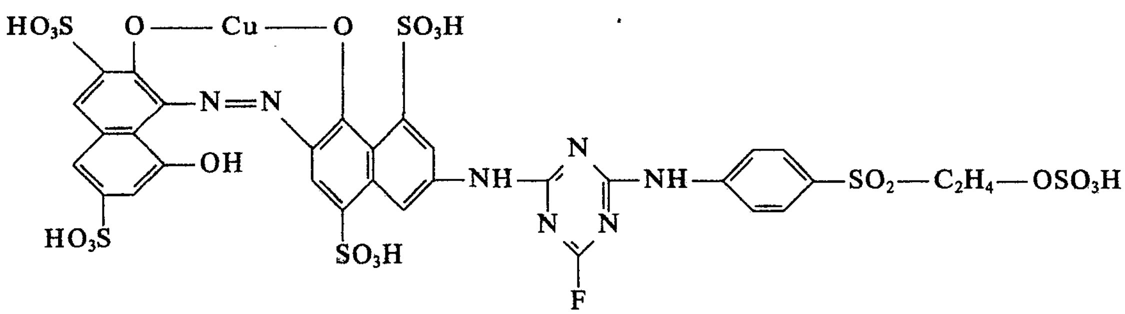

Beispiel 5

Ersetzt man in Beispiel 1a die 8-Amino-1-benzolsulfonyloxynaphthalin-3,5-disulfonsäure durch die äquivalente Menge 1-Aminonaphthalin-4,7-disulfonsäure und die 6-Acetylamino-1-naphthol-4,8-disulfonsäure durch 6-[2',4'-difluor-5'-chlor-6'-pyrimidyl]-amino-1-naphthol-4,8-disulfonsäure, so erhält man einen Reaktivfarbstoff, der in Form der freien Säure folgender Formel entspricht

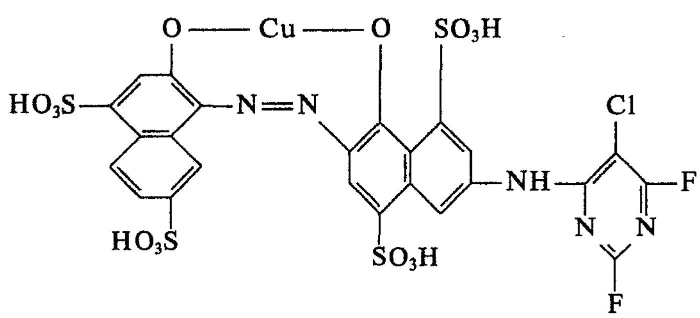

und der Baumwolle in rotstichigen Marineblautönen anfärbt.

Beispiel 6

Ersetzt man in Beispiel 3 die 6-Acetylamino-1-naphthol-4,8-disulfonsäure durch die äquivalente Menge 7,7'-(Carbonylimino)bis-[4-hydroxynaphthalin-1,5-disulfonsäure] und verfährt nach Beispiel 1a, so erhält man nach Verseifung der o-Benzolsulfonylgruppen einen Direktfarbstoff, der in Form der freien Säure folgender Formel entspricht:

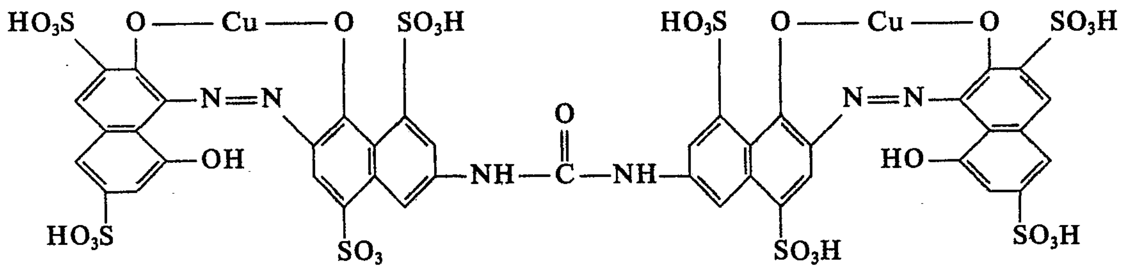

und Baumwolle in sehr klaren, grünstichigen Blautönen anfärbt.

Beispiel 7

Ersetzt man in Beispiel 1a die 8-Amino-1-benzolsulfonyloxynaphthalin-3,5-disulfonsäure durch die äquivalente Menge 1-Aminobenzol-4-sulfonsäure und die 6-Acetylamino-1-naphthol-4,8-disulfonsäure durch 6-[2',4'-difluor-5'-chlor-6'-pyrimidyl]-amino-1-naphthol-3-sulfonsäure, so erhält man einen Reaktivfarbstoff, der in Form der freien Säure folgender Formel entspricht:

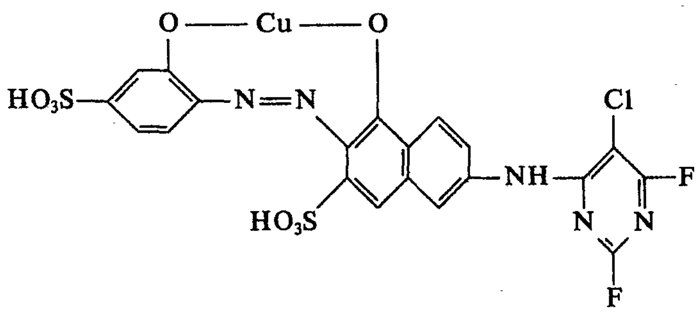

und der Baumwolle in Rubintönen anfärbt.

Beispiel 8

Ersetzt man in Beispiel 7 die 1-Aminobenzol-4-sulfonsäure durch die äquivalente Menge 2-Naphthylamin-4,6,8-trisulfonsäure, so erhält man einen Reaktivfarbstoff, der in Form der freien Säure folgender Formel entspricht:

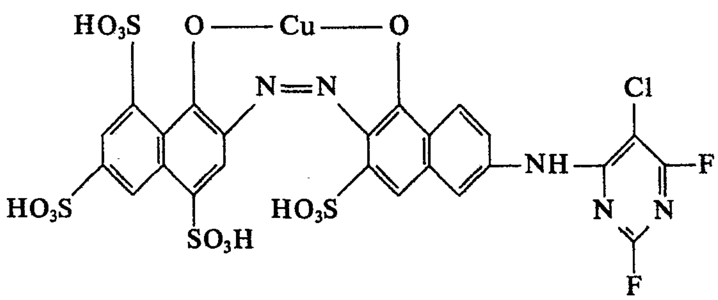

und Baumwolle in Violettönen anfärbt.

Beispiel 9

Ersetzt man in Beispiel 8 2,4,6-Trifluor-5-chlorpyrimidin durch 2,4-Difluor-5-chlor-6-methylpyrimidin, so erhält man einen Reaktivfarbstoff, der auf Baumwolle violette Färbungen und Drucke liefert.

**Patentanspruch**

Verfahren zur Herstellung von Kupferkomplexazofarbstoffen aus Azofarbstoffen der Formel

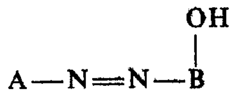

(I)

worin

A = gegebenenfalls weitersubstituierter Phenyl- oder Naphthylrest mit unsubstituierter o-Stellung zur Azogruppe

B = Rest einer Kupplungskomponente mit zur Azogruppe o-ständiger phenolischer oder enolischer OH-Gruppe, insbesondere Rest einer Klupplungskomponente der Phenol-, Naphthol-, Pyrazol-, Pyrazolon-, Pyridon- oder Acetessigarylid-Reihe,

dadurch gekennzeichnet, daß man in Gegenwart von Lithiumcarbonat in schwach saurem Medium oxydativ kupfert.

**Claim**

Process for the preparation of copper complex azo dyestuffs from azo dyestuffs of the formula

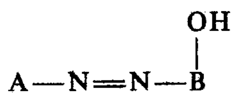

(I)

wherein

A = an optionally further substituted phenyl or naphthyl radical having an unsubstituted o-position relative to the azo group, and

B = the radical of a coupling component having a phenolic or enolic OH group in the o-position relative to the azo group, in particular the radical of a coupling component of the phenol, naphthol, pyrazole, pyrazolone, pyridone or aceto-acetic acid arylide series,

characterised in that oxidative coppering is carried out in a weakly acid medium in the presence of lithium carbonate.

**Revendication**

Procédé pour la fabrication de colorants azoïques sous la forme de complexes de cuivre, á partir de colorants azoïques de formule

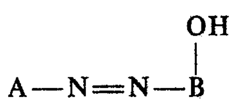

(I)

dans laquelle

A représente un reste phényle ou naphthyle éventuellement encore substitué, non substitué en position ortho par rapport au groupe azo

B représente le reste d'un composant de copulation ayant un groupe OH phénolique ou énolique en position ortho du groupe azo, en particulier le reste d'un composant de copulation de la série du phénol, du naphthol, du pyrazole, de la pyrazolone, de la pyridone ou des acétylacétarylides,

caractérisé en ce que l'on effectue le cuivrage oxydant en milieu faiblement acide en présence de carbonate de lithium.